# EUROPEAN PATENT SPECIFICATION

(11) **EP 0 765 365 B1**
(45) Date of publication and mention of the grant of the patent: **20.10.1999**
(21) Application number: 96914910.3
(22) Date of filing: 12.04.1996
(51) Int. Cl.: C09D 5/02, E04F 13/02, C04B 41/48

(54) **USE OF A COATING COMPOSITION WITH HIGH PIGMENT-VOLUME-CONCENTRATION**
VERWENDUNG EINER BESCHICHTUNGSZUSAMMENSETZUNG MIT HOHER PIGMENT-VOLUMEN-KONZENTRATION
UTILISATION D'UNE COMPOSITION A ENDUIRE AYANT UNE CONCENTRATION PIGMENTAIRE VOLUMIQUE ELEVEE

(30) Priority: 12.04.1995 GB 9507656
(43) Date of publication of application: 02.04.1997
(73) Proprietor: Surface Coatings International, St. Helier, Jersey (GB)
(72) Inventor: HARRISON, Shane, Richmond, Cape Town, 7945 (ZA); HILL, Derek, Alfred, Wheeler, Surrey RH2 9TH (GB)
(74) Representative: Gowshall, Jonathan Vallance
(86) International application number: EP9601566
(87) International publication number: WO9632450

(56) References cited:
- EP-A- 0 199 921
- EP-A- 0 217 380
- EP-A- 0 312 334
- EP-A- 0 327 376
- EP-A- 0 496 682
- EP-A- 0 549 145
- US-A- 3 239 475
- US-A- 3 926 894
- PAINTINDIA, vol. 36, no. 12, 1 December 1986, pages 23, 25, 28-31, XP000575142 READER C E L: "VEOVA LATICES FOR EMULSION PAINTS"
- PAINT & RESIN, vol. 52, no. 4, 1 July 1982, page 11, 14 XP000575414 SELLARS K: "VINYL ACETATE/VEOVA 10 COPOLYMER FOR HIGH PVC PAINTS"

## Description

The present invention relates to the use of a refurbishing coating for suspended ceiling systems.

One typical suspended ceiling system comprises a multitude of tiles, usually manufactured from mineral fibre, plaster, metal or plastic faced plasterboard, held in position by a supporting exposed grid system. In this type of ceiling system it is essential to maintain continual access to the area above the tiles, which commonly accommodates water, power, communication and ventilation services. In order to reach the area above the tiles, to service and maintain these supplies, it is essential that the ceiling tiles are pushed above and away from the metal grid system.

At present, suspended ceiling tiles are refurbished using traditional water-based emulsion paints, of which a standard formulation is
33.5% of vinyl acrylate VeoVa 10 copolymer
19.0% of Titanium dioxide
10.0% of China clay
6.0% of Calcium carbonate
0.6% of Cellulose thickener
0.8% of Biocide
30.1% of Water

However, upon applying these paints, a film is formed between the tile and the grid, thus joining the tile to the metal grid system, known in the art as "bridging". Accordingly, upon forcing the tiles upwards in order to access the ceiling void, the film between the tiles and metal grid system is broken, resulting in cracks in the decorative finish of the tiles and, often, tile breakages. In some circumstances, the formation of a film between the tile and the metal grid system completely prevents any movement of the tile. In addition, the mineral fibre tiles are highly absorbent, absorbing a great deal of paint and hence a number of coats of traditional emulsion paint have to be applied to the tiles to achieve the desired finish. This often causes the tiles to bow and warp under the weight of the wet paint. The absorbency of the tiles is also a problem when traditional emulsion paints are diluted with water, in an attempt to avoid a film forming between the tile and the metal grid system. The tiles absorb the water, resulting in bowing and warping. In all cases watering down the paint leads to insufficient coverage of stains on the old tiles and is, therefore, an unacceptable solution to the problem of bridging.

Another type of suspended ceiling system is a concealed grid system. This comprises ceiling tiles fixed into the grid by the use of splines, with the result that the grid system is not visible from below. When this type of ceiling system is painted with a traditional water-based emulsion paint, a film of paint is formed between the tiles. This prevents the tiles from being removed, and often results in tile breakages and an aesthetically unsatisfactory finish.

A further disadvantage of using traditional emulsion paints on suspended ceiling systems is that the acoustic properties of the ceiling are altered, since the film-forming nature of these paints causes the face texture, patterns, fissures and perforations of the tiles to be blocked. This also results in a change in the ceiling's appearance.

A further disadvantage is that tiles refurbished with traditional emulsion paint cannot adapt to changes in temperature and humidity conditions since these emulsion paints are not so vapour permeable. The tiles become nonporous due to the formation of a film on the tiles and metal grid system, thus resulting in distortion of the tiles. In addition, the grid system cannot be cleaned after being coated with a traditional emulsion, as these paints do not provide suitable durability and adhesion, and accordingly such a decorative finish on a metal grid system can be rubbed off with detergent. This is a particular problem when the tiles are also metal.

US-A-3,239,475 discloses coatings, comprising poly (ethylene oxide) and a sodium salt of a polyelectrolyte for applying to vertical fibrous glass boards.

Suspended ceiling systems may also be refurbished by replacing only those tiles stained or damaged. However, this creates a patchwork effect on the ceiling, due to the differing appearance of new and old tiles. This results in a ceiling of low aesthetic quality.

In addition, it is possible to replace a complete set of tiles into an old supporting grid system. However, this is a slow process and may cause an unacceptable level of contamination in sensitive environments such as computer installations. The supporting grid system remains discoloured and dirty. To refurbish the grid, the tiles must be first removed and the grids painted by hand using a solvent based paint, followed by the installation of new ceiling tiles. This is an expensive and inconvenient method.

It is possible to refurbish a ceiling by complete replacement of tiles and the supporting grid system. This is time consuming, expensive and inconvenient.

The present invention seeks to provide a method of renovating and decorating both suspended ceiling tiles and their respective supporting metal grid system, without bridging the interface between the tile and the supporting grid, thus providing continual access to the ceiling void, and maintaining a ceiling of high aesthetic quality.

The present invention is directed to the use of a composition, comprising a resin dispersion, a filler, a pigment, a thickener and water, wherein the Pigment Volume Concentration (PVC) of the composition is at least, 70%, preferably 75%, and most preferably wherein the PVC is 80%, in coating a suspended ceiling system comprising a plurality of tiles supported by a grid.

The PVC value is calculated as the percentage of pigment and filler in the dry applied coating, calculated on a volume basis. To calculate the PVC, the components of the formulation should be given in percentage weights The volume is then calculated from the specific gravity, or density, of each component. The volume of the resin in the resin dispersion must be calculated separately, as it is only the density of the solid resin, and not that of water, that is relevant to this calculation. The PVC is then expressed as the volume of the pigment and extender as a percentage of the sum of the volume of pigment, extender, solid resin and any other solids present, such as cellulose thickener and biocide solids.

One feature of this invention is the realisation that paints which do not bridge the interface between the tiles and the metal supporting grid system have a higher PVC than those paints that are film forming and bridge the tile to. the grid. Traditional emulsion paints, which are known to bridge the tile to the grid upon application to suspended ceiling systems, have now been calculated to have a PVC of between 40% and 65% Formulations according to the present invention contain higher amounts of pigment and lower amounts of filler or extender than traditional paints with a lower PVC.

This formulation comprises a mixture of organic and inorganic fillers and pigments, together with certain beneficial additives, which when the coating is dry, are bonded with a water based organic resin dispersion. A typical formulation for a non bridging coating is :-
8 to 20%, preferably 10 to 20% of 50% solids vinyl acetate/VeoVa 10 copolymer dispersion.
3 to 25%, preferably 10 to 25% of Titanium dioxide (pigment)
10 to 40%, preferably 10 to 15% of China clay (filler)
10 to 25% of Calcium carbonate (filler)
1 to 10% of Silica (filler)
0.1 to 5% of Sodium nitrite
1 to 7% of Sodium benzoate
0.1 to 5% of Alkyl aryl trimethyl ammonium chloride
0.05 to 0.25%, preferably 0.2% of Cellulose ether
25 to 45%, preferably 25 to 35% of Water All values are percentage by weight.

The high pigment/filler volume of such a formulation provides the non-bridging element between the tile and the supporting grid, and also provides the essential feature of water vapour permeability to the coating.

### Calculation of PVC

The PVC of a typical formulation as described above is calculated as follows:-

| Component | % by weight | Density | % Volume |
|---|---|---|---|
| Vinyl acetate/ VeoVa dry resin | 7.5 | 1.04 | 7.21 |
| Water | 7.5 | - | - |
| Titanium dioxide | 21.0 | 4.20 | 5.00 |
| China Clay | 12.0 | 2.60 | 4.60 |
| Calcium Carbonate | 21.0 | 2.70 | 7.80 |
| Silica | 3.0 | 2.30 | 1.30 |
| Cellulose Thickener | 0.2 | 1.33 | 0.15 |
| Biocide | 0.2 | 1.15 | 0.17 |
| Water | 27.6 | - | - |
| Total volume of pigment and extender | | | = 18.70 |
| Total volume of Pigment/Extender/resin + solids M | | | = 26.23 |
| PVC | | | = 71.3 % |

The use of a formulation as described, in order to refurbish suspended ceiling systems, does not create a bridging film between the tiles and the supporting metal grid system. This maintains continual access to the ceiling void. The coating provides a decorative finish to the tile surface, yielding a non-reflective sheen at a low angle of incidence. In addition, the acoustic properties of the ceiling are maintained, as a formulation of this kind does not fill in the fissures, face textures, patterns or perforations of the ceiling tiles. The coating described is vapour permeable, and is applied as a single coat, thus preventing warping, or bowing, as it allows the tiles to expand or contract to changing temperature and humidity conditions within the building. The coating is also odourless, allowing almost immediate re-occupation of the restored areas. Since the formulation is water based, it is non hazardous and non-toxic. Use of this formulation allows complete renovation of ceilings damaged by smoke, water stains, soot and nicotine and also provides a long lasting, maintenance free coating protection to the metal supporting grid system, which allows the supporting grid system to be easily and efficiently cleaned and maintained after application. A formulation as described also maintains fire ratings at class 'O' and class '1' as defined by British Standard 476: part 6 and 7.

Application of the composition may be effected by any suitable means such as brush, roller or spray.

Any resin dispersion typically used in the art may be used in the formulation of the present invention. It would be immediately apparent to a person of skill in the art as to which resin dispersions are suitable.

The resin dispersion used in the present invention is a copolymer of vinyl acetate and the vinyl ester of Versatic 10 (also known as VeoVa® 10), the structure of Versatic 10 being 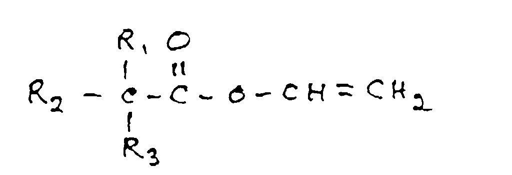 wherein R₁, R₂ and R₃ are alkyl groups, at least one of which is always methyl. Alternative resin dispersions that are also used include a copolymer of Butyl Acrylate with the vinyl ester of Versatic 10, a vinyl acetate/ethylene/vinyl chloride terpolymer dispersion, a styrene/acrylic ester dispersion or an acrylic dispersion.

Titanium dioxide is a white pigment essential for the production of a white paint. A combination of titanium dioxide and Ropaque OP-62LO, an opaque white organic polymer dispersion, may also be used in the formulation. The inclusion of Ropaque OP-62LO gives better washability. The inclusion of titanium dioxide, at 10-25%, provides the sufficient opacity to the resultant coating. Traditional emulsion paints, with less true pigment, lack sufficient opacity for use as ceiling coatings.

China clay, calcium carbonate and silica are fillers, or extenders, which provide the necessary high pigment/filler volume to result in the non bridging element of this formulation. The use of silica in the formulation produces minimal light reflection at a low angle of incidence.

Cellulose ether is a thickener which helps to stabilise the pigment/extender dispersion in the resin dispersion and also provides the necessary rheology to the formulation, in order that it may be applied to the ceiling by either brush, roller or spray. Other thickeners, such as starch-like products may also be used, as will be well understood by the skilled practitioner.

Further water is added to the formulation to aid its application to the ceiling.

Rust prevention agents, such as sodium nitrite and sodium benzoate may be added to the formulation, to prevent "flash rusting" when the coating is added to any ferrous metal surface.

A biocide may also be added to the formulation to prevent mould and bacterial growth on the surface of the dry coating. Alkyl aryl trimethyl ammonium chloride is commonly used as such a biocide.

An in-can preservative may also be added to the formulation to prevent biochemical breakdown of the components in the wet paint. A typical preservative of this kind is Acticide BX.

Such a formulation as described may be manufactured by wetting the pigment and extenders with the cellulose ether solution in water, followed by dispersion using a Greaves, Silverson or Cowles mixer. The resin dispersion and the additional components such as rust-prevention agents and biocides, are then slowly added to complete the formulation.

An alternative formulation, which is of particular use on metal surfaces is:

| **INGREDIENT** | **% by weight** |
|---|---|
| Water | 25.4 |
| Dispersant | 0.25 |
| Defoamer | 0.1 |
| Coalescent | 0.78 |
| Bactericide (In-can preservative) | 0.2 |
| China Clay | 6.31 |
| Calcium Carbonate | 34.6 |
| Titanium Dioxide | 18.93 |
| Vinyl acetate/VeoVa 10 | |
| Copolymer dispersion | 11.4 |
| Humectant (Mono propylene glycol) | 1.9 |
| Cellulose Ether | 0.13 |

This formulation has a P.V.C. of 80% and a specific gravity of 1.58. The W/W solids is 65.8% and the V/V solids is 39.7%. This has a particularly matt finish and a longer drying time than the first formulation.

A third alternative formulation, also of use on metal surfaces, is:

| **INGREDIENT** | **% by weight** |
|---|---|
| Water | 33.2 |
| Dispersant | 0.23 |
| Defoamer | 0.11 |
| Coalescent | 0.77 |
| Bactericide (In-can preservative) | 0.19 |
| China Clay | 5.63 |
| Calcium Carbonate | 30.7 |
| Titanium Dioxide | 16.6 |
| Vinyl acetate/VeoVa® 10 | |
| Copolymer dispersion | 10.69 |
| Humectant (Mono propylene glycol) | 1.75 |
| Cellulose Ether (Thickener) | 0.13 |

This formulation has a P.V.C. of 80% and a specific gravity of 1.5 ± 0.1. The V/V solids is 35%. This also has a good matt finish and a longer drying time than the first formulation.

## Claims

1. Use of a composition, comprising a resin dispersion, a filler, a pigment, a thickener and water, wherein the Pigment Volume Concentration (PVC) of the composition is at least 70%, in coating a suspended ceiling system comprising a plurality of tiles supported by a grid, wherein the resin dispersion is a copolymer of vinyl acetate or butyl acrylate with VeoVa 10 (Trade Mark), a styrene acrylic ester, a vinyl acetate/ethylene/vinyl chloride terpolymer or an acrylic dispersion.

2. Use according to Claim 1, wherein the PVC is at least 80%.

3. Use according to Claim 1 or 2, wherein the filler is china clay, calcium carbonate or silica.

4. Use according to any one of the preceding claims, wherein the thickener is a cellulose ether.

5. Use according to any one of the preceding claims, further comprising a rust prevention agent.

6. Use according to Claim 5, wherein the rust prevention agent is sodium nitrate or sodium benzoate.

7. Use according to any of the preceding claims, further comprising a biocide.

8. Use according to Claim 7, wherein the biocide is alkyl aryl trimethyl ammonium chloride.

9. Use according to any one of the preceding claims, further comprising a preservative.

10. Use according to any preceding claim wherein application is effected by brush, roller or spray.

## Patentansprüche

1. Verwendung einer Zusammensetzung, die eine Harzdispersion, einen Füllstoff, ein Pigment, ein Verdickungsmittel und Wasser umfaßt, wobei die Pigment-Volumen-Konzentration (PVC) der Zusammensetzung mindestens 70 % beträgt, zur Beschichtung hängender Deckensysteme, die eine Vielzahl von Platten, die durch ein Gitter gehalten werden, umfassen, wobei die Harzdispersion ein Copolymer aus Vinylacetat oder Butylacrylat mit VeoVa 10 (Marke), ein Styrolacrylester, ein Vinylacetat/Ethylen/Vinylchlorid-Terpolymer oder eine Acryldispersion ist.

2. Verwendung nach Anspruch 1, wobei die PVC mindestens 80 % beträgt.

3. Verwendung nach Anspruch 1 oder 2, wobei der Füllstoff Kaolin, Calciumcarbonat oder Silika ist.

4. Verwendung nach einem der vorangehenden Ansprüche, wobei das Verdickungsmittel ein Celluloseether ist.

5. Verwendung nach einem der vorangehenden Ansprüche, welche weiter ein Rostschutzmittel umfaßt.

6. Verwendung nach Anspruch 5, wobei das Rostschutzmittel Natriumnitrat oder Natriumbenzoat ist.

7. Verwendung nach einem der vorangehenden Ansprüche, welche weiter ein Biozid umfaßt.

8. Verwendung nach Anspruch 7, wobei das Biozid Alkylaryltrimethylammoniumchlorid ist.

9. Verwendung nach einem der vorangehenden Ansprüche, welche weiter ein Konservierungsmittel umfaßt.

10. Verwendung nach einem der vorangehenden Ansprüche, wobei das Aufbringen durch Pinsel, Rolle oder Sprühzerstäuber bewirkt wird.

## Revendications

1. Utilisation d'une composition, comprenant une dispersion de résine, une charge, un pigment, un épaississant et de l'eau, la Concentration Volumique de Pigment (PVC, Pigment Volume Concentration) de la composition étant d'au moins 70%, dans le revêtement de systèmes de plafond suspendu comprenant plusieurs tuiles supportées par une grille, dans laquelle la dispersion de résine est un copolymère d'acétate de vinyle ou d'acrylate de butyle avec du VeoVa 10 (nom de marque), un ester acrylique de styrène, un terpolymère d'acétate de vinyle/éthylène/chlorure de vinyle ou une dispersion acrylique.

2. Utilisation selon la revendication 1, dans laquelle la PVC est d'au moins 80%.

3. Utilisation selon la revendication 1 ou 2, dans laquelle la charge est du kaolin, du carbonate de calcium ou de la silice.

4. Utilisation selon l'une quelconque des revendications précédentes, dans laquelle l'épaississant est un éther de cellulose.

5. Utilisation selon l'une quelconque des revendications précédentes, comprenant en outre un agent de prévention de la rouille.

6. Utilisation selon la revendication 5, dans laquelle l'agent de prévention de la rouille est du nitrate de sodium ou du benzoate de sodium.

7. Utilisation selon l'une quelconque des revendications précédente, comprenant en outre un biocide.

8. Utilisation selon la revendication 7, dans laquelle le biocide est un chlorure d'alkylaryltriméthylammonium.

9. Utilisation selon l'une quelconque des revendications précédentes, comprenant en outre un conservateur.

10. Utilisation selon l'une quelconque des revendications précédentes, dans laquelle l'application est effectuée par une brosse, un rouleau ou par pulvérisation.
